# EUROPEAN PATENT SPECIFICATION

(11) **EP 0 924 136 B1**
(45) Date of publication and mention of the grant of the patent: **31.10.2001**
(21) Application number: 98830724.5
(22) Date of filing: 02.12.1998
(51) Int. Cl.: B65C 1/02, B65C 9/02, B65C 9/14, B65C 9/34, B65G 47/31

(54) **A method for applying slips of materials to substantially parallelepiped packets**
Verfahren zum Aufbringen von Materialstreifen auf im wesentlichen rechteckigen Schachteln
Procédé pour appliquer des morceaux de matériau sur des paquets essentiellement parallélépipédiques

(30) Priority: 22.12.1997 IT BO970728
(43) Date of publication of application: 23.06.1999
(73) Proprietor: G.D S.p.A., 40133 Bologna (IT)
(72) Inventor: Draghetti, Fiorenzo, 40059 Medicina (Bologna) (IT); Li Vigni, Angelo, 40133 Bologna (IT)
(74) Representative: Pederzini, Paolo

(56) References cited:
- EP-A- 0 757 960
- DE-A- 4 133 404
- GB-A- 2 055 747
- GB-A- 2 250 730
- US-A- 4 181 561
- US-A- 4 589 943
- US-A- 4 738 359
- US-A- 5 097 939
- US-A- 5 111 633
- US-A- 5 203 953
- US-A- 5 309 695
- US-A- 5 607 526

## Description

The present invention relates to a method for the application of slips of material to substantially parallelepiped packets of cigarettes.

More exactly, the present invention relates to a method for the application of seals or revenue stamps to packets of cigarettes emerging from the wrapping wheel of a machine for the fabrication or packaging of such packets, this being the art field to which direct reference is made in the following specification, albeit with no limitation in scope implied.

Generally speaking, a packet of cigarettes appears as a substantially rectangular parallelepiped with a predominating longitudinal axis compassed between two end faces and presenting four side faces of which two are larger and two smaller, the latter establishing two flank faces.

Packets turned out by a packaging machine of the type in question will be directed typically onto a first continuously driven conveyor and advanced randomly toward a transfer station, where they are decelerated in such a way as to form a single file disposed in close order one adjacent to the next, then diverted by pickup and transfer means onto a second conveyor and advanced along a predetermined feed path toward a cellophaner.

The packets advance on the second conveyor usually with their respective longitudinal axes disposed substantially transverse to the feed path, resting on one of the two larger faces.

An additional function of the aforementioned pickup and transfer means is to distance the packets one from the next during their passage from the first conveyor to the second conveyor, spacing them apart at an interval timed to coincide precisely with the operating cycle of the cellophaner.

At a given point during their progress along the second conveyor, a seal or revenue stamp is applied to each of the advancing packets. The operation in question is carried out normally through the agency of an aspirating roller that rotates substantially tangential to the feed path followed by the packets in such a way that with the passage of each packet and at a predetermined position established by an initial timing operation, a previously gummed stamp is affixed in its entirety to one of the two larger side faces of the packet. Alternatively, the stamp may be applied with one end projecting beyond one of the two longitudinal corner edges of the face in question, in which the projecting portion is bent over and flattened against the adjoining flank face of the packet.

In either case, the stamp is disposed transversely to the longitudinal axis of the packet.

If it is wished to apply the stamp along one flank face of the packet, disposed longitudinally on the face, the affixing operation involves difficulties of a technical nature and can become practically impossible by reason of the high speed at which the packets advance along the second conveyor, also of the short distance (set during the aforementioned timing operation) by which each one is separated from the next.

The problem is heightened where, as often occurs, the second conveyor is equipped with slats or push bars by which the packets are advanced along the feed path, given that these elements enter directly into contact with the flank face of each packet and disallow the application of a stamp by conventional continuous methods.

It is also known, from document GB 2055747A, a method for applying slips to the flank faces of cigarette packets.

In this case the packets are advanced along a first rectilinear path by means of a conveyor belt, then are transferred to packets holders through a lifter.

The packets holders are mounted on a rotating wheel. The rotation of the wheel guides the packets along a circular path toward the station in which the slips are applied. During the whole process the packets are moved with their predominating longitudinal axis transversal to the path.

Moreover, document US 4,589,943 describes a machine for applying tax stamps or the like adhesive labels to articles such as cigarettes packets.

The packets are arranged in two or more rows in a cartoon, with exposed ends facing upwardly. A head, disposed above the path covered by the cartoon, carries a corresponding number of rows of spaced-apart labels. When the head comes into contact with the packets a label is applied to the upper end face of each packet.

The object of the present invention is to provide a method for the application of slips of material to substantially parallelepiped packets of cigarettes, such as can be guaranteed free of the drawbacks described above and made as simple and rational as possible.

The stated object is duly realized according to the present invention in a method as described in claim 1.

The invention will now be described in detail, by way of example, with the aid of the accompanying drawings, in which:
- fig 1 illustrates a portion of a packaging machine suitable for implementing the method according to the present invention, shown in a first embodiment, viewed schematically in a side elevation and with certain parts omitted for clarity;
- fig 2 shows the portion of the packaging machine illustrated in fig 1, illustrated schematically and in plan with parts omitted for clarity;
- fig 3 illustrates a detail of fig 1, viewed from above;
- fig 4 illustrates a further detail of fig 1 viewed schematically and in elevation, with certain parts in section and others omitted for clarity;
- fig 5 shows a second embodiment of the portion of a packaging machine as in fig 1, schematically and in plan, with parts omitted for clarity.

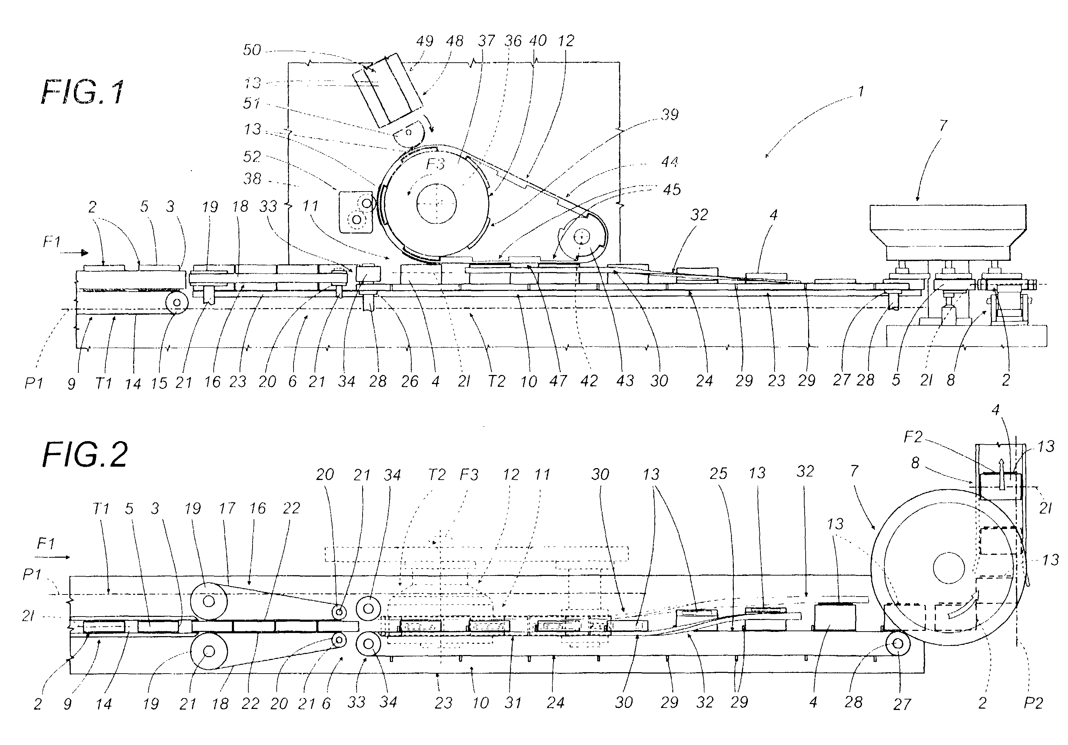

With reference to figs 1 and 2 of the accompanying drawings, 1 denotes a portion, in its entirety, of a packaging machine as used in the manufacture of cigarette packets; more exactly, a single packet 2 turned out by the machine appears substantially as a rectangular parallelepiped with a predominating longitudinal axis 21 and presents two end faces 3, two larger side faces 4 and two smaller side or flank faces 5.

The portion 1 of the packaging machine comprises a first line 6 along which packets 2 emerging from a wrapping wheel (not illustrated) are advanced along a first predetermined rectilinear feed path P1 and in a first direction denoted F1 toward a transfer device 7, before being redirected onto a second line 8 and advanced along a second predetermined feed path P2 in a second direction denoted F2 toward a further machine, typically a cellophaner (not illustrated).

Observing figs 1 and 2, the line 6 will be seen to comprise conveying means consisting in first and second conveyor devices 9 and 10 arranged in series along the first feed path P1, extending from the wrapping wheel to a point immediately preceding the transfer device 7 and passing through an affixing station 11 equipped with applicator means 12 of which the function is to apply a revenue stamp 13 to one flank face 5 of each packet 2.

The first conveyor device 9 comprises a belt 14 looped around a pair of pulleys 15 (one only of which is shown) and set in rotation continuously, by which packets 2 are received from the wrapping wheel and fed in succession randomly along a first stretch T1 of the first feed path P1, with their longitudinal axes parallel to the selfsame path P1, toward braking means 16 positioned at an initial portion of a second stretch T2 of the path P1, and interposed between the first and second conveyor devices 9 and 10.

The braking means 16 comprise two power driven gripper belts 17 and 18 flanking a runout portion of the first conveyor device 9, one on each side, and looped around respective pairs of pulleys 19 and 20 keyed to corresponding shafts 21 extending perpendicular to the plane of fig 2 and to the first feed direction F1. The two belts 17 and 18 afford two mutually opposed rectilinear branches 22 advancing parallel with the feed direction F1 at a velocity nominally less than that of the belt 14 first mentioned, in such a manner as to interact with the two larger faces 4 of each packet 2 and bring about a reduction in feed velocity whereby the packets 2 are caused to advance in single file substantially with no gaps between one and the next, sliding on a transport surface 23 located beneath the belts 17 and 18 and resting on one flank face 5.

The second conveyor device 10 is disposed and embodied in such a way as to advance the packets 2 along the same first path P1 spaced uniformly apart one from the next, and comprises a substantially horizontal belt conveyor 24 running along one side only of the line 6; more exactly, the conveyor 24 occupies a position to the right of the packets 2, as viewed along the feed direction F1, and presents a transport branch 25 offered tangentially to the path P1 in such a way as to breast in contact with one of the larger side faces 4 of each packet 2. The conveyor 24 in question is looped around two pulleys 26 and 27, the first of which power driven, keyed onto respective shafts 28 (shown to better advantage in fig 1) disposed perpendicular to the plane of fig 2 and to the first feed direction F1, and affords a plurality of outwardly projecting push bar elements 29 spaced apart uniformly one from the next by which the packets 2 are engaged cyclically and fed toward the transfer station 7.

The packets 2 are maintained in alignment, all identically oriented with the longitudinal axis 21 parallel to the first feed path P1 and to the first feed direction F1, by two lateral guide fences 30 disposed frontally in relation to the branch 25 of the conveyor 24 and on either side of the advancing packets 2.

The fences 30 also function as means by which to flip the packets 2 and, more exactly, are divided into a first longitudinal portion 31 along which both extend rectilinearly and parallel to the feed path P1, constraining the packets 2 to stand up on edge with one flank face 5 resting on the transport surface 23 and one side face 4 in contact with the transport branch 25 of the push bar conveyor 24, also a second longitudinal portion 32 along which the two fences 30 are twisted gradually in such a way as to describe a helical path. It will be clear enough that on encountering the second longitudinal portion 32, in operation, each packet 2 advancing along the first feed direction F1 will be caused to rotate gradually through 90° about its longitudinal axis 21, passing from the position standing on edge to a position with one larger face 4 flat on the transport surface 23 and one flank face 5 offered to the branch 25 of the push bar conveyor 24.

Also indicated are means 33 stationed beyond the braking means 16 in the first feed direction F1, by which the packets 2 are accelerated and transferred in succession toward the push bar conveyor 24. Such accelerating and transfer means 33 are timed with the conveyor 24 in such a way that each packet 2 directed toward the branch 25 will be intercepted by one of the push bar elements 29.

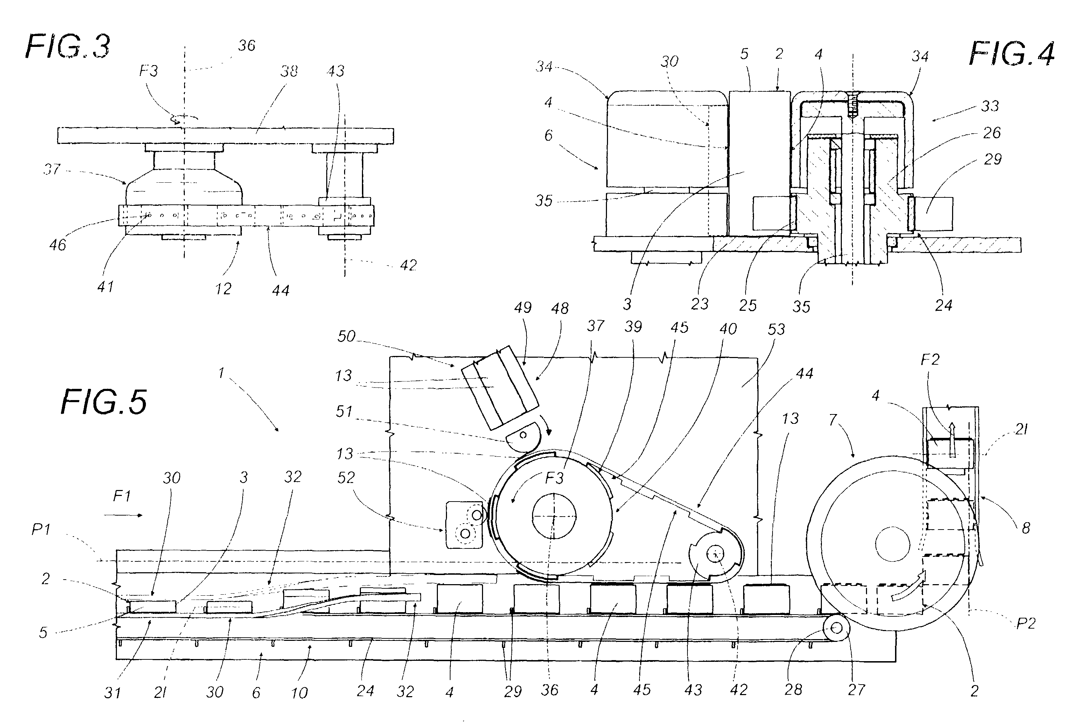

As discernible from fig 4, the accelerating and transfer means 33 comprise two rollers 34 located one on either side of the advancing packets 2 and keyed to respective power driven shafts 35 disposed perpendicular to the transport surface 23. The two rollers 34 are mutually opposed and separated by a distance marginally less than the depth of a single packet 2 as measured transversely between the two larger side faces 4, and synchronized with the push bar conveyor 24 in such a manner that each packet 2 to emerge from the braking means 16 will be taken up cyclically and accelerated, transferred forward along the feed direction F1 and released ultimately to the conveyor 24.

Observing figs 1, 2 and 3, the applicator means 12 aforementioned are located beyond the rollers 34 and associated with the affixing station 11 where the slips are longitudinally applied to the packets; such means consist in a drum 37 rotatable continuously about a central axis 36 and in an anticlockwise direction denoted F3, tangential to the conveyor 24 at a point coinciding with the station 11.

The drum 37 is cantilevered from a fixed vertical wall 38 afforded by the portion 1 of the packaging machine, its axis of rotation 36 horizontal and transverse to the feed path P1, and in conventional manner comprises a plurality of suction plates 39 equispaced angularly around a cylindrical surface of revolution 40. Each suction plate 39 connects by way of respective holes 41, illustrated in fig 3, with a pneumatic circuit of conventional embodiment (not illustrated) such as will allow the plate 39 to retain a respective stamp 3.

The applicator means 12 further comprise a belt 44 looped around a return pulley 43, located alongside and beyond the drum 37 relative to the first feed direction F1, which is cantilevered likewise from the vertical wall 38 and rotatable thus about an axis denoted 42. The inward facing surface of the belt 4 affords a plurality of seats or recesses 45 distributed uniformly along its developable length in such a way as to engage the suction plates 39 of the drum 37, each affording a plurality of through holes 46 (see fig 3) positioned to coincide with the holes 41 of the plates 39. The function of the recesses 45 is to ensure that the belt 44 remains correctly in position and therefore correctly timed with the drum 37, so that the holes 46 of the one will always coincide with the holes 41 of the other and the retention of the stamps 13 is assured.

Still observing fig 1, the belt 44 is disposed in such a way that one branch 47 remains in contact with the flank faces 5 of packets 2 passing through the affixing station 11; the branch 47 in question accompanies each packet 2 along the feed path P1 in the relative feed direction F1, and establishes an active operating surface by which the stamps 13 are affixed, describing a closed loop and maximizing adhesion between the stamp 13 and the flank face 5 of the corresponding packet 2.

Also constituting part of the applicator means 12 is a feed unit 48 dispensing the revenue stamps 13, mounted to the vertical wall 38 and comprising a magazine 49 that contains a stack 50 of stamps 13; in accordance with prior art methods, the stamps are taken up by a relative circular sector 51 from the bottom of the stack 50, utilizing the force of suction, and transferred cyclically from the sector to the belt 44 at a station with which the suction plates 39 of the drum 37 rotate successively into alignment.

It will be appreciated that the second conveyor device 10 is timed with the drum 37 in such a way that the passage of a push bar element 29 and of a relative packet 2 through the affixing station 11 will always coincide with the passage along the first feed path P1, and through the station 11, of a suction plate 30 together with the corresponding part of the belt 44, disposed tangentially to the flank face 5 of the packet 2; this ensures that the stamp 13, of which one face will have been gummed previously by a gumming station 52 of conventional embodiment operating alongside the drum 37, can be applied and affixed correctly to the selfsame flank face 5.

In use, before reaching the station 7 at which they are transferred to the second line 8, the packets 2 emerging from the wrapping wheel advance along the first line 6 identically oriented each with its predominating longitudinal axis 21 parallel to the first feed path P1 and the first feed direction F1, and one flank face 5 sliding along the transport surface 23, directed forward by the continuously driven conveyor 14. The packets 2 are advanced by the conveyor 14 randomly along a first stretch T1 of the path P1 toward the braking means 16, duly intercepted by the branches 22 of the belts 17 and 18, and decelerated to bring about the formation of a single file of packets 2 advancing in contact one with the next.

The packets 2 are then taken up by the rollers 34 and accelerated toward the push bar conveyor 24, which advances them along the second stretch T2 of the path P1 and through the affixing station 11, beneath the drum 37.

At the same time the stamps 13 are dispensed to the drum 37 by the respective circular sectors 51, and more exactly, deposited cyclically by the sectors onto the belt 44 at points coinciding with each of the suction plates 39 around the drum 37, whereupon the stamps 13 are retained in conventional manner through the agency of the suction holes 41 in the plates 39 and the holes 46 afforded by the belt 44.

Once held stably on the belt 44 in alignment with a relative plate 39, the single stamp 13 is conveyed by the belt angularly in the direction denoted F3 through the gumming station 52, where the outward facing surface is coated with gum in conventional manner, and through the affixing station 11 where it meets the flank face 5 of a relative packet 2.

As each packet 3 continues to advance along the feed direction F1, the belt 44 will continue to press the affixed stamp 13 against the flank face 5 so as to ensure faultless adhesion.

Once through the affixing station, the packets 2 continue their advance along the first feed path P1 in the first feed direction F1 and encounter the second longitudinal portion 32 of the fences 30, whereupon each packet in turn is rotated 90° about its longitudinal axis 21 from the on edge position to a position with one larger side face 4 resting on the transport surface 22 and one flank face 5 in contact with the branch 25 of the conveyor 24.

The packets 2 are carried thus toward the transfer device 7, redirected onto a second line 3, and caused thereafter to follow a second predetermined feed path P2, advancing in a second predetermined feed direction F2 toward a further machine unit, typically a cellophane wrapper, not illustrated in the drawings.

In the example of fig 5, the applicator means 12 differ from those of figs 1 and 2 solely as regards their position in space with respect to the second conveyor device 10; in this instance the applicator means 12 operate horizontally in relation to the second conveyor 10, at a point coinciding with the terminal portion of the fences 30.

In particular, the axis 36 of the revolving drum 37 is disposed vertically and orthogonal to the feed path P1, as also is the axis of rotation 42 of the return pulley 43 about which the belt 44 is looped.

The two axes 36 and 42 are disposed perpendicularly to a horizontal supporting wall 53.

The operation of the applicator means 12 indicated in fig 5 is no different to that already described with reference to the example of figs 1 and 2, and indeed the belt 44 performs the selfsame function, namely applying the gummed revenue stamps 13 to the flank faces 5 of the packets 2 before the packets reach the transfer device 7.

## Claims

1. A method for the application of slips of material to substantially parallelepiped packets of cigarettes in machines (1) for the manufacture of packets (2) of cigarettes exhibiting a predominating longitudinal axis (21), two end faces (3), two larger side faces (4) and two smaller side or flank faces (5),
the method comprising the steps of advancing the packets (2) along a predetermined feed path, (P1), through the agency of conveying means (9, 10) toward a station (11) at which the slips (13) are affixed; and of applying a slip (13) longitudinally to one flank face (5) of each packet (2) during its passage through the affixing station (11), **characterized in that** the feed path is rectilinear and **in that** the packets are advanced along the feed path (P1) each disposed with the predominating longitudinal axis parallel to the feed path (P1), the advancing step comprising the individual steps of advancing the packets (2) randomly along a first stretch (T1) of the feed path (P1), then ordering the packets (2) along a second stretch (T2) of the path (P1), the ordering step comprising the step of decelerating the packets (2) through the agency of braking means (16), forming a single file of packets (2) advancing in contact one with the next, and taking up the advancing packets (2) individually from the single file through the agency of means (33) by accelerating and transferring them at regular intervals toward the affixing station (11),
the method being also **characterized in that** said conveying means (9, 10) afford a surface (23) that extends at least through the affixing station (11), along which the packets (2) advance each resting on one of their sides.

2. A method as in claim 1 **characterized in that** the packets are advanced along said surface each resting on one smaller side or flank face (5).

3. A method as in claim 1 **characterized in that** the pakets are advanced along said surface each resting on one larger side face (4).

4. A method as in claims 1 to 3, wherein the step of applying the slip is effected through the agency of applicator means (12) affording an active operating surface (44, 47) invested with movement along a looped path, of which at least one branch (47) is disposed substantially tangential to the smaller side or flank face (5) of the packet (2).

5. A method as in claim 1, **characterized in that** at the end of the first predetermined feed path (P1) the packets are redirected by a transfer device (7) onto second conveying means (8) and advanced along a second predetermined feed path (P2) in a second feed direction (F2) each witty the longitudinal axis (21) disposed transversely to the selfsame second feed path (P2).

6. A method as in claim 5 wherein the operation of the transfer device (7) and of the accelerating and transfer means (33) are timed one with another.

## Patentansprüche

1. Verfahren zum Aufbringen von Materialstreifen auf im wesentlichen rechteckige Zigarettenschachteln in Maschinen (1) zur Herstellung von Zigarettenschachteln (2), die eine vorherrschende Längsachse (21) aufweisen, sowie zwei Endflächen (3), zwei grössere Seitenflächen (4) und zwei kleinere Seitenflächen (5) oder Flanken, wobei das Verfahren die Phasen des Vorlaufens der Schachteln (2) entlang einer bestimmten Vorschubbahn (P1) durch die Wirkung von Fördermitteln (9, 10) in Richtung einer Station (11) enthält, in welcher die Banderolenstreifen (13) aufgebracht werden; sowie des Aufbringens eines Banderolenstreifens (13) in Längsrichtung auf eine Seitenfläche (5) einer jeden Schachtel (2) während des Durchlaufs derselben durch die Aufbringstation (11), **dadurch gekennzeichnet, dass** die Vorschubbahn geradlinig ist, und dass die Schachteln entlang der Vorschubbahn (P1) vorgeschoben werden, jede angeordnet mit der vorherrschenden Längsachse parallel zu der Vorschubbahn (P1), wobei die Vorschubphase die individuellen Phasen des Vorlaufs der Schachteln (2) in loser Anordnung entlang einer ersten Strecke (T1) der Vorschubbahn (P1), dann das Ordnen der Schachteln (2) entlang einer zweiten Strecke (T2) der Vorschubbahn (P1) enthält, wobei die Phase des Ordnens auch die Phase der Verlangsamung der Schachteln (2) durch die Wirkung von Bremsmitteln (16) enthält und dabei eine einzelne Reihe von Schachteln (2) bildet, die im Kontakt eine mit der nächsten vorlaufen, und dann das Aufnehmen der vorlaufenden Schachteln (2) individuell von der einzelnen Reihe mit Hilfe von Mitteln (33) durch Beschleunigung und Weiterleiten derselben in gleichmässigen Intervallen in Richtung der Aufbringstation (11), wobei das Verfahren ebenfalls **dadurch gekennzeichnet ist, dass** die genannten Fördermittel (9, 10) eine Fläche (23) aufweisen, die sich wenigstens durch die Aufbringstation (11) erstreckt, entlang welcher die Schachteln (2) vorlaufen, wobei jede mit einer ihrer Seiten aufliegt.

2. Verfahren nach Patentanspruch 1, **dadurch gekennzeichnet, dass** die Schachteln entlang der genannten Fläche vorgeschoben werden, wobei jede mit der kleineren Seitenfläche oder Flanke (5) aufliegt.

3. Verfahren nach Patentanspruch 1, **dadurch gekennzeichnet, dass** die Schachteln entlang der genannten Fläche vorgeschoben werden, wobei jede mit der grösseren Seitenfläche (4) aufliegt.

4. Verfahren nach den Patentansprüchen von 1 bis 3, bei welchem die Phase des Aufbringens des Streifens durch die Wirkung von Aufbringmitteln (12) ausgeführt wird, die eine aktive Arbeitsfläche (44, 47) aufweisen, versehen mit einer Bewegung entlang einer ringförmigen Bahn, von welcher wenigstens ein Trum (47) im wesentlichen tangential zu der kleineren Seitenfläche oder Flanke (5) der Schachtel (2) angeordnet ist.

5. Verfahren nach Patentanspruch 1, **dadurch gekennzeichnet, dass** an dem Ende der ersten bestimmten Vorschubbahn (P1) die Schachteln durch eine Transfervorrichtung (7) auf zweite Fördermittel (8) umgeleitet und entlang einer zweiten bestimmten Vorschubbahn (P2) in einer zweiten Vorschubrichtung (F2) vorgeschoben werden, wobei eine jede mit der Längsachse (21) quer zu der Vorschubbahn (P2) selbst angeordnet ist.

6. Verfahren nach Patentanspruch 5, bei welchem der Betrieb der Transfervorrichtung (7) und der Beschleunigungs- und Transfermittel (33) miteinander getaktet sind.

## Revendications

1. Un procédé pour appliquer des morceaux de matériau, ou bandes, sur des paquets de cigarettes essentiellement parallélépipédiques dans des machines (1) à confectionner des paquets (2) de cigarettes présentant un axe longitudinal prédominant (21), deux faces d'extrémité (3), deux grandes faces latérales (4) et deux petites faces latérales ou côtés (5), ledit procédé comprenant les phases suivantes : faire avancer les paquets (2) le long d'un parcours d'avance prédéterminé (P1), par l'intermédiaire de moyens de transport (9, 10), vers une station (11) au niveau de laquelle les bandes (13) sont appliquées ; et appliquer dans le sens de la longueur une bande (13) sur un côté (5) de chaque paquet (2) lors de son passage à travers la station d'application (11), **caractérisé en ce que** le parcours d'avance est rectiligne et **en ce que** les paquets sont acheminés le long du parcours d'avance (P1) disposés chacun avec leur axe longitudinal prédominant parallèle à ce même parcours d'avance (P1), ladite phase d'avance comprenant les phases séparées suivantes : faire avancer les paquets (2) dans un ordre aléatoire le long d'une première section (T1) du parcours d'avance (P1), puis ordonner les paquets (2) le long d'une deuxième section (T2) du parcours (P1), ladite phase consistant à ordonner les paquets (2) comprenant la phase de décélération de ces mêmes paquets (2) par l'intermédiaire de moyens de freinage (16), formant ainsi une file unique de paquets (2) avançant en contact réciproque l'un derrière l'autre, et la phase de prélèvement, de cette file unique, de chacun des paquets (2) qui avancent par l'intermédiaire de moyens (33) destinés à les accélérer et à les transférer à intervalles réguliers vers la station d'application (11), ledit procédé étant également **caractérisé en ce que** lesdits moyens de transport (9, 10) présentent un plan (23) qui s'étend au moins à travers la station d'application (11), et le long duquel les paquets (2) avancent en reposant chacun sur l'un de leurs côtés.

2. Le procédé selon la revendication 1, **caractérisé en ce que** les paquets avancent le long du plan (23) susmentionné en reposant chacun sur une petite face latérale ou côté (5).

3. Le procédé selon la revendication 1, **caractérisé en ce que** les paquets avancent le long du plan (23) susmentionné en reposant chacun sur une grande face latérale (4).

4. Le procédé selon les revendications de 1 à 3, **caractérisé en ce que** ladite phase d'application de la bande est effectuée par l'intermédiaire de moyens applicateurs (12) présentant une surface opérationnelle active (44, 47) mobile le long d'un parcours fermé en boucle, dont au moins une branche (47) est essentiellement tangentielle à la petite face latérale ou côté (5) du paquet (2).

5. Le procédé selon la revendication 1, **caractérisé en ce qu'**au bout du premier parcours d'avance prédéterminé (P1), les paquets sont re-dirigés par un dispositif de transfert (7) sur des deuxièmes moyens de transport (8) et sont acheminés le long d'un deuxième parcours d'avance prédéterminé (P2) dans une deuxième direction d'avance (F2) avec, chacun, leur axe longitudinal (21) transversal à ce même deuxième parcours d'avance (P2).

6. Le procédé selon la revendication 5, **caractérisé en ce que** le fonctionnement du dispositif de transfert (7) est synchronisé avec celui des moyens d'accélération et de transfert (33) susmentionnés.
